(19) Europäisches Patentamt
European Patent Office
Office européen des brevets

(11) **EP 4 120 416 A1**

(12) **EUROPEAN PATENT APPLICATION**
published in accordance with Art. 153(4) EPC

(43) Date of publication:
**18.01.2023 Bulletin 2023/03**

(21) Application number: **20924032.4**

(22) Date of filing: **11.03.2020**

(51) International Patent Classification (IPC):
**H01M 10/0525** (2010.01)

(52) Cooperative Patent Classification (CPC):
**H01M 10/0525**

(86) International application number:
**PCT/CN2020/078772**

(87) International publication number:
**WO 2021/179202 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• ZHANG, Ting
 **Ningde, Fujian 352100 (CN)**
• JIANG, Daoyi
 **Ningde, Fujian 352100 (CN)**
• CUI, Hang
 **Ningde, Fujian 352100 (CN)**

(74) Representative: **Klunker IP Patentanwälte PartG mbB Destouchesstraße 68 80796 München (DE)**

(54) **LITHIUM ION BATTERY AND ELECTRONIC DEVICE**

(57) The present invention provides a lithium-ion battery, including a battery cell, an electrolytic solution, and a packaging film. The battery cell is formed by winding a positive electrode plate and a negative electrode plate that are separated by a separator. The lithium-ion battery is half-charged to obtain a half-charged full battery. The half-charged full battery is stripped of the packaging film to obtain a half-charged cell. When a width of the half-charged full battery is wi, a width of the half-charged cell is $w_2$, and $g = w_2/w_1$, the following conditional expression (1) is satisfied: $0.4 < g < 0.997$. A negative active material of the negative electrode plate includes a silicon-based material. When a capacity per unit volume of the negative electrode plate is a, a and g satisfy the following conditional expression (2): $420$ mAh/$cm^3 < g \times a < 2300$ mAh/$cm^3$, where $619$ mAh/$cm^3 < a < 3620$ mAh/$cm^3$. The present invention further provides an electronic device.

FIG. 1

EP 4 120 416 A1

**Description**

**TECHNICAL FIELD**

The present invention relates to the technical field of lithium-ion batteries, and in particular, to a lithium-ion battery and an electronic device.

**BACKGROUND**

A soft-packed lithium-ion battery generally includes a battery cell and a packaging film. A battery cell winding technique is widely used in the field of lithium-ion batteries by virtue of high production efficiency. However, electrode plates for being wound in a winding process are long (usually longer than 40 cm), and a positive electrode plate and a negative electrode plate expand in volume to different degrees during charge-and-discharge cycles. Especially, a silicon-containing negative electrode plate expands more severely in volume, thereby making the wound battery cell incur problems of deformation and wrinkles after a chemical formation capacity test. Nevertheless, by virtue of a high capacity per unit volume, the silicon-containing negative electrode plate is the most promising negative electrode plate for use in next-generation lithium-ion batteries. Therefore, it is crucial to alleviate the expansion and deformation problems of lithium-ion batteries, especially a lithium-ion battery that includes a silicon-containing negative electrode plate.

**SUMMARY**

In view of the problem that a battery cell in a lithium-ion battery cell expands and deforms, the present invention provides a lithium-ion battery and a preparation method thereof. By reserving a space in a punched pit of an outer packaging film (packaging film), the present invention effectively alleviates expansion and battery cell deformation, and in turn, improves the cycle stability of a full battery.

To achieve the foregoing objective, the present invention provides a lithium-ion battery. The lithium-ion battery includes a battery cell, an electrolytic solution, and a packaging film. The battery cell is formed by winding a positive electrode plate and a negative electrode plate that are separated by a separator. The lithium-ion battery is half-charged to obtain a half-charged full battery. The half-charged full battery is stripped of the packaging film to obtain a half-charged cell.

When a width of the half-charged full battery is wi, a width of the half-charged cell is $w_2$, and $g = w_2/w_1$, the following conditional expression (1) is satisfied:

$$0.4 < g < 0.997 \qquad (1).$$

The negative electrode plate includes a silicon-based material, and, when a capacity per unit volume of the negative electrode plate is a, a and g satisfy the following conditional expression (2):

$$420 \, \mathrm{mAh}/cm^3 < g \times a < 2300 \, \mathrm{mAh}/cm^3 \qquad (2)$$

where, 619 mAh/$cm^3$ < a < 3620 mAh/$cm^3$.

Specifically, the width $w_1$ of the half-charged full battery means a minimum value of the width of the half-charged full battery (including the packaging film and the battery cell) obtained after the lithium-ion battery is half-charged, and is usually measured with a vernier caliper. The width $w_2$ of half-charged cell means a maximum value of a distance between a left turning and a right turning on an outermost circle of the battery cell of the half-charged full battery stripped of the packaging film, and is usually measured with a vernier caliper. When the number of winding layers and the width of the battery cell are constant, the width of the half-charged full battery can be adjusted by adjusting a clearance between the battery cell and a punched pit of the packaging film according to the volume expansion degree of the negative electrode plate, thereby effectively alleviating volume expansion and battery cell deformation, improving cycle stability of the full battery, and increasing a product yield rate.

In the lithium-ion battery according to the present invention, the silicon-based material preferably includes at least one of nano-silicon, oxide of silicon, a silicon-carbon composite material, or a silicon alloy material.

In the lithium-ion battery according to the present invention, the silicon-based material is preferably granular, and an average particle diameter thereof is preferably 500 nm to 30 $\mu$m.

In the lithium-ion battery according to the present invention, the nano-silicon is preferably granular, and an average particle diameter thereof is preferably less than 100 nm.

In the lithium-ion battery according to the present invention, the oxide of silicon is preferably $SiO_x$, where $0.6 \leq x \leq 2$.

In the lithium-ion battery according to the present invention, a positive active material of the positive electrode plate is preferably at least one selected from combinations of lithium cobalt oxide, lithium manganese oxide, lithium iron phosphate, lithium nickel oxide, lithium nickel cobalt oxide, or lithium nickel cobalt manganese oxide.

In the lithium-ion battery according to the present invention, the separator is preferably at least one selected from combinations of polyethylene, polypropylene, or polyvinylidene difluoride.

In the lithium-ion battery according to the present invention, the packaging film is preferably an aluminum plastic film.

In the lithium-ion battery according to the present invention, the packaging film preferably possesses a thickness of 67 to 153 $\mu$m and a tensile strength of 4 to 10 N/mm.

The present invention further provides a method for preparing a lithium-ion battery, including the following steps:

S1. mixing a positive active material with a conductive agent, a binder, and a solvent, and stirring to make a mixed slurry, coating a substrate with the mixed slurry, and performing drying, cold calendering, and slitting to obtain a positive electrode plate;

S2. mixing a negative active material with a conductive agent, a binder, and a solvent, and stirring to make a mixed slurry, coating a substrate with the mixed slurry, and performing drying, cold calendering, and slitting to obtain a negative electrode plate;

S3. stacking the positive electrode plate, a separator, and the negative electrode plate in sequence, and winding the stacked materials to obtain an electrode assembly; and

S4. putting the electrode assembly into a packaging film, and, upon completion of drying, injecting an electrolytic solution, and performing sealing, chemical formation, degassing, and edge trimming to obtain a full battery.

The full battery is half-charged to obtain a half-charged full battery. The half-charged full battery is stripped of the packaging film to obtain a half-charged cell. When a width of the half-charged full battery is wi, a width of the half-charged cell is $w_2$, and $g = w_2/w_1$, the following conditional expression (1) is satisfied:

$$0.4 < g < 0.997 \qquad (1).$$

In addition, a negative active material of the negative electrode plate includes a silicon-based material. When a capacity per unit volume of the negative electrode plate is a, a and g satisfy the following conditional expression (2):

$$420 \text{ mAh}/cm^3 < g \times a < 2300 \text{ mAh}/cm^3 \qquad (2)$$

where, 619 mAh/$cm^3$ < a < 3620 mAh/$cm^3$.

The present invention further provides an electronic device. The electronic device includes the lithium-ion battery described above.

In the lithium-ion battery and preparation method thereof according to the present invention, the width of the half-charged full battery is adjusted by adjusting a clearance between the battery cell and a punched pit of the packaging film according to the volume expansion degree of the negative electrode plate, thereby effectively alleviating volume expansion and battery cell deformation, improving cycle stability of the full battery, and increasing a product yield rate.

**BRIEF DESCRIPTION OF DRAWINGS**

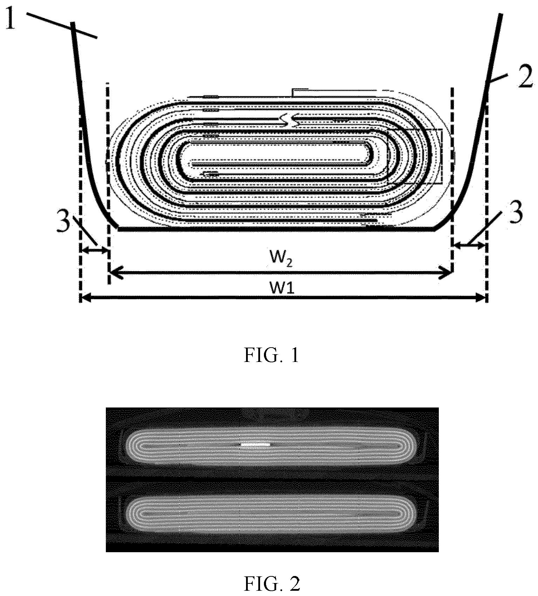

FIG. 1 is a schematic sectional view of a structure of a half-charged full battery according to the present invention;

FIG. 2 shows a battery cell subjected to 100 cycles according to Embodiment 6 (a ripple value of a corresponding battery of the measured battery cell is 0.8%);

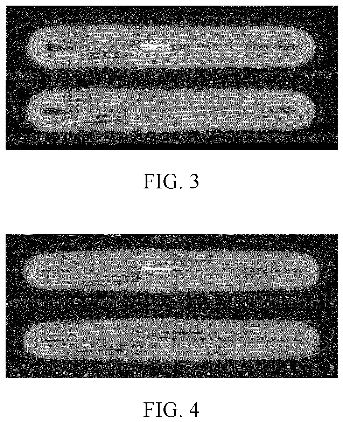

FIG. 3 shows a battery cell subjected to 100 cycles according to Comparative Embodiment 4 (a ripple value of a corresponding battery of the measured battery cell is 7.2%); and

FIG. 4 shows a battery cell subjected to 100 cycles according to Comparative Embodiment 1 (a ripple value of a corresponding battery of the measured battery cell is 5.8%).

Reference numerals:

1: Punched pit; 2: packaging film; 3: clearance;
$w_1$: width of half-charged full battery; $w_2$: width of half-charged cell.

## DETAILED DESCRIPTION OF EMBODIMENTS

Embodiments of the present invention are described in detail below. The embodiments are implemented based on the technical solution of the present invention, and include detailed manners and processes of implementation, but the protection scope of the present invention is not limited to the following embodiments. An experimental method described in the following embodiments without specifying conditions are generally performed under conventional conditions.

I. Terms and definitions

1. Wrinkling, deformation

In the present invention, wrinkling is a phenomenon of continuous warps of a separator and a positive or negative electrode plate; deformation is defined as a phenomenon in which the ripple value is greater than 2%, and severe deformation is defined as a phenomenon in which the ripple value is greater than 4%, where the ripple value is calculated by the following formula: ripple value = parallel plate gauge thickness (PPG) of a full battery/thickness at maximum material condition (MMC) -1.

2. Half charging

A full battery charged until the voltage reaches a range of 3.7 V to 4.0 V is defined as a half-charged full battery, and such a charging process is referred to as half charge.

II. Testing battery performance

1. Testing the deformation severity of a full battery:

With PPG defined as the parallel plate gauge thickness of a full battery, the PPG thickness of the full battery is measured with a parallel plate gauge by performing the following steps: putting the full battery in a PPG under a pressure of 700 g to measure a surface-to-surface thickness of the full battery for three consecutive times, and averaging out three thickness values to obtain a PPG thickness. With MMC defined as a point-to-point thickness of the full battery, the MMC thickness is measured by performing the following steps: sampling three points at intervals below an aluminum tab along a vertical direction of the tab, measuring the thickness of the battery with a micrometer, and averaging out three thickness values to obtain the MMC thickness. With the ripple value defined to be PPG/MMC-1, the deformation severity is determined based on the thickness data of the full battery subjected to 100 cycles. Deformation occurs if the ripple value is greater than 2%, and the deformation is severe if the ripple value is greater than 4%.

2. Testing the performance of the full battery:

High-temperature cycle performance test: Charging the battery at a constant current of 0.7 C at 45 °C until the voltage reaches 4.4 V; charging the battery at a constant voltage until the current reaches 0.025 C; leaving the battery to stand for 5 minutes, and then discharging the battery at a current of 0.5 C until the voltage reaches 3.0 V. Using the capacity obtained in this step as an initial capacity, and cycling the battery repeatedly by charging at 0.7 C and discharging 0.5 C. Comparing the capacity in each cycle with the initial capacity to obtain a plurality of ratios that are then plotted into a capacity fade curve. In the present invention, the cycle performance of the battery is indicated by the number of cycles completed when the capacity fades to 80% of the initial capacity.

III. Specific embodiments and comparative embodiments

**Embodiment 1**

Preparing a full battery

(1) Preparing a positive electrode plate: Mixing $LiCoO_2$ as a positive active material, carbon black as a conductive agent, and polyvinylidene difluoride (PVDF) as a binder at a weight ratio of 96.7: 1.7: 1.6 in an N-methyl-pyrrolidone solvent system, and stirring evenly to form a slurry; coating an aluminum foil with the slurry, and then performing drying and cold calendering, and slitting to obtain a positive electrode plate.

(2) Mixing commercial oxide of silicon ($SiO_x$) (0.5 < x < 1.5, $D_{v50}$ = 5 $\mu$m) with graphite to obtain a negative active material, in which the weight percent of the commercial $SiO_x$ in the negative active material is 0 wt% to 5 wt%. Mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 9.74 mg/cm$^2$. The weight percent of the commercial $SiO_x$ in the negative active material is controlled to fall within a range of 0 wt% to 5 wt%, and an appropriate value is selected in this range so that the capacity a per unit volume of the negative electrode plate is 619.8 mAh/cm$^3$.

(3) Using a polyethylene (PE) porous polymer film as a separator, stacking the positive electrode plate, the separator, and the negative electrode plate in sequence, placing the separator between the positive electrode and the negative electrode to serve a function of separation, and winding them to obtain an electrode assembly.

(4) Preparing an electrolytic solution: Adding lithium hexafluorophosphate ($LiPF_6$) into a solvent in a dry argon atmosphere, where the solvent is a mixture of propylene carbonate (PC), ethylene carbonate (EC), and diethyl carbonate (DEC) (at a weight ratio of 1:1:1); mixing the solution homogeneously, where the concentration of $LiPF_6$ is approximately 1.15 mol/L; and then adding 12 wt% fluoroethylene carbonate (FEC), and mixing the solution homogeneously to obtain an electrolytic solution.

(4) Packaging the electrode assembly into a punched pit 1 of the packaging film 2 (the aluminum plastic film contains an outer layer of nylon, a middle layer of aluminum, and an inner layer of PP, the thickness and strength of which are shown in Table 1). Upon completion of drying, injecting the electrolytic solution, and performing sealing, chemical formation, degassing, and edge trimming to obtain a full battery.

By controlling the clearance 3 between the battery cell and the punched pit, the width $w_1$ of the half-charged full battery is caused to be 15.7 mm, and the width $w_2$ of the half-charged battery cell is caused to be 15.6 mm. At this time, g = 0.99, and g $\times$ a = 613.6 mAh/cm$^3$.

After the lithium-ion full battery is obtained, the battery is tested with respect to performance indicators such as battery deformation severity and battery cycle performance. The detailed test results are shown in Table 1.

## Embodiment 2

The capacity a per unit volume of the negative electrode plate is also 619.8 mAh/cm$^3$. Differences from Embodiment 1 are: during sealing, an inner pit width $w_1$ of the punched pit 1 of the packaging film 2 is controlled to be 36.7 mm, and the width $w_2$ of the battery cell is controlled to be 36.1 mm. At this time, g = 0.98, and g $\times$ a = 607.4 mAh/cm$^3$.

After the lithium-ion full battery is obtained, the battery is tested with respect to performance indicators such as battery deformation severity and battery cycle performance. The detailed test results are shown in Table 1.

## Embodiment 3

Differences from Embodiment 1 are as follows:

Mixing commercial oxide of silicon ($SiO_x$) (0.5 < x < 1.5, $D_{v50}$ = 15 $\mu$m) with graphite to obtain a negative active material, in which the weight percent of the commercial $SiO_x$ in the negative active material is 10 wt% to 15 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 7.27 mg/cm$^2$. The weight percent of the commercial $SiO_x$ in the negative active material is controlled to fall within a range of 10 wt% to 15 wt%, and an appropriate value is selected in this range so that the capacity a per unit volume of the negative electrode plate is 957.8 mAh/cm$^3$.

During sealing, an inner pit width $w_1$ of the punched pit 1 of the packaging film 2 is controlled to be 17.1 mm, and the width $w_2$ of the battery cell is controlled to be 16.5 mm. At this time, g = 0.96, and g $\times$ a = 919.5 mAh/cm$^3$.

After the lithium-ion full battery is obtained, the battery is tested with respect to performance indicators such as battery deformation severity and battery cycle performance. The detailed test results are shown in Table 1.

## Embodiment 4

The capacity a per unit volume of the negative electrode plate is also 957.8 mAh/cm$^3$. Differences from Em-

bodiment 3 are: during sealing, an inner pit width $w_1$ of the punched pit 1 of the packaging film 2 is controlled to be 37.2 mm, and the width $w_2$ of the battery cell is controlled to be 36.2 mm. At this time, g = 0.97, and g × a = 929.1 mAh/cm$^3$.

After the lithium-ion full battery is obtained, the battery is tested with respect to performance indicators such as battery deformation severity and battery cycle performance. The detailed test results are shown in Table 1.

## Embodiment 5

Differences from Embodiment 1 are as follows:

Mixing commercial oxide of silicon (SiO$_x$) (0.5 < x < 1.5, $D_{v50}$ = 5 μm) with graphite to obtain a negative active material, in which the weight percent of the commercial SiO$_x$ in the negative active material is 20 wt% to 25 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 5.324 mg/cm$^2$. The weight percent of the commercial SiO$_x$ in the negative active material is controlled to fall within a range of 20 to 25 wt%, and an appropriate value is selected in this range so that the capacity a per unit volume of the negative electrode plate is 1151.3 mAh/cm$^3$.

During sealing, an inner pit width $w_1$ of the punched pit 1 of the packaging film 2 is controlled to be 17.0 mm, and the width $w_2$ of the battery cell is controlled to be 16.0 mm. At this time, g = 0.94, and g × a = 1082.2 mAh/cm$^3$.

After the lithium-ion full battery is obtained, the battery is tested with respect to performance indicators such as battery deformation severity and battery cycle performance. The detailed test results are shown in Table 1.

## Embodiment 6

The capacity a per unit volume of the negative electrode plate is also 1151.3 mAh/cm$^5$. Differences from Embodiment 3 are: during sealing, an inner pit width $w_1$ of the punched pit 1 of the packaging film 2 is controlled to be 37.5 mm, and the width $w_2$ of the battery cell is controlled to be 36.3 mm. At this time, g = 0.97, and g × a = 1116.8 mAh/cm$^3$.

After the lithium-ion full battery is obtained, the battery is tested with respect to performance indicators such as battery deformation severity and battery cycle performance. The detailed test results are shown in Table 1.

## Comparative Embodiment 1

Differences from Embodiment 1 are as follows: during sealing, an inner pit width $w_1$ of the punched pit 1 of the packaging film 2 is controlled to be 36.0 mm, and the width $w_2$ of the battery cell is controlled to be 36.0 mm. At this time, g = 0.9992, and g × a = 619.3 mAh/cm$^3$.

After the lithium-ion full battery is obtained, the battery is tested with respect to performance indicators such as battery deformation severity and battery cycle performance. The detailed test results are shown in Table 1.

## Comparative Embodiment 2

Differences from Embodiment 3 are as follows: during sealing, an inner pit width $w_1$ of the punched pit 1 of the packaging film 2 is controlled to be 16.54 mm, and the width $w_2$ of the battery cell is controlled to be 16.5 mm. At this time, g = 0.9975, and g × a = 955.4 mAh/cm$^3$.

After the lithium-ion full battery is obtained, the battery is tested with respect to performance indicators such as battery deformation severity and battery cycle performance. The detailed test results are shown in Table 1.

## Comparative Embodiment 3

Differences from Embodiment 5 are as follows: during sealing, an inner pit width $w_1$ of the punched pit 1 of the packaging film 2 is controlled to be 44.5 mm, and the width $w_2$ of the battery cell is controlled to be 15.6 mm. At this time, g = 0.35, and g × a = 403.0 mAh/cm$^3$.

After the lithium-ion full battery is obtained, the battery is tested with respect to performance indicators such as battery deformation severity and battery cycle performance. The detailed test results are shown in Table 1.

## Embodiment 7

Differences from Embodiment 1 are as follows:

Mixing commercial oxide of silicon (SiO$_x$) (0.5 < x < 1.5, $D_{v50}$ = 5 μm) with graphite to obtain a negative active material, in which the weight percent of the commercial $SiO_x$ in the negative active material is 30 wt% to 35 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 5.324 $mg/cm^2$. The weight percent of the commercial $SiO_x$ in the negative active material is controlled to fall within a range of 30 wt% to 35 wt%, and an appropriate value is selected in this range so that the capacity a per unit volume of the negative electrode plate is 1336.7 $mAh/cm^3$.

During sealing, an inner pit width $w_1$ of the punched pit 1 of the packaging film 2 is controlled to be 17.9 mm, and the width $w_2$ of the battery cell is controlled to be 15.9 mm. At this time, g = 0.89, and g $\times$ a = 1189.6 $mAh/cm^3$.

After the lithium-ion full battery is obtained, the battery is tested with respect to performance indicators such as battery deformation severity and battery cycle performance. The detailed test results are shown in Table 1.

**Embodiment 8**

Differences from Embodiment 1 are as follows:

Mixing commercial oxide of silicon ($SiO_x$) (0.5 < x < 1.5, $D_{v50}$ = 5 $\mu$m) with graphite to obtain a negative active material, in which the weight percent of the commercial $SiO_x$ in the negative active material is 45 wt% to 50 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 4.181 $mg/cm^2$. The weight percent of the commercial $SiO_x$ in the negative active material is controlled to fall within a range of 45 wt% to 50 wt%, and an appropriate value is selected in this range so that the capacity a per unit volume of the negative electrode plate is 1671.8 $mAh/cm^3$.

During sealing, an inner pit width $w_1$ of the punched pit 1 of the packaging film 2 is controlled to be 40.7 mm, and the width $w_2$ of the battery cell is controlled to be 36.9 mm. At this time, g = 0.91, and g $\times$ a = 1521.3 $mAh/cm^3$.

After the lithium-ion full battery is obtained, the battery is tested with respect to performance indicators such as battery deformation severity and battery cycle performance. The detailed test results are shown in Table 1.

**Embodiment 9**

Differences from Embodiment 1 are as follows:

Mixing commercial oxide of silicon ($SiO_x$) (0.5 < x < 1.5, $D_{v50}$ = 5 $\mu$m) with graphite to obtain a negative active material, in which the weight percent of the commercial $SiO_x$ in the negative active material is 55 wt% to 60 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 3.265 $mg/cm^2$. The weight percent of the commercial $SiO_x$ in the negative active material is controlled to fall within a range of 55 wt% to 60 wt%, and an appropriate value is selected in this range so that the capacity a per unit volume of the negative electrode plate is 2006.6 $mAh/cm^3$.

During sealing, an inner pit width $w_1$ of the punched pit 1 of the packaging film 2 is controlled to be 21.8 mm, and the width $w_2$ of the battery cell is controlled to be 15.8 mm. At this time, g = 0.72, and g $\times$ a = 1444.8 $mAh/cm^3$.

After the lithium-ion full battery is obtained, the battery is tested with respect to performance indicators such as battery deformation severity and battery cycle performance. The detailed test results are shown in Table 1.

**Embodiment 10**

Differences from Embodiment 1 are as follows:

Mixing commercial oxide of silicon ($SiO_x$) (0.5 < x < 1.5, $D_{v50}$ = 5 $\mu$m) with graphite to obtain a negative active material, in which the weight percent of the commercial $SiO_x$ in the negative active material is 80 wt% to 85 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 2.640 $mg/cm^2$. The weight percent of the commercial $SiO_x$ in the negative active material is controlled to fall within a range of 80 wt% to 85 wt%, and an appropriate value is selected in this range so that the capacity a per unit volume of the negative electrode plate is 2422.2 mAh/cm$^3$.

During sealing, an inner pit width $w_1$ of the punched pit 1 of the packaging film 2 is controlled to be 78.0 mm, and the width $w_2$ of the battery cell is controlled to be 70.0 mm. At this time, g = 0.89, and g × a = 2155.7 mAh/cm$^3$.

After the lithium-ion full battery is obtained, the battery is tested with respect to performance indicators such as battery deformation severity and battery cycle performance. The detailed test results are shown in Table 1.

**Embodiment 11**

Differences from Embodiment 1 are as follows:

Mixing commercial oxide of silicon (SiO$_x$) (0.5 < x < 1.5, D$_{v50}$ = 95 μm) with graphite to obtain a negative active material, in which the weight percent of the commercial SiO$_x$ in the negative active material is 90 wt% to 95 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 2.449 mg/cm$^2$. The weight percent of the commercial SiO$_x$ in the negative active material is controlled to fall within a range of 90 wt% to 95 wt%, and an appropriate value is selected in this range so that the capacity a per unit volume of the negative electrode plate is 2677.7 mAh/cm$^3$.

During sealing, an inner pit width $w_1$ of the punched pit 1 of the packaging film 2 is controlled to be 45.9 mm, and the width $w_2$ of the battery cell is controlled to be 35.9 mm. At this time, g = 0.78, and g × a = 2088.6 mAh/cm$^3$.

After the lithium-ion full battery is obtained, the battery is tested with respect to performance indicators such as battery deformation severity and battery cycle performance. The detailed test results are shown in Table 1.

**Embodiment 12**

Differences from Embodiment 1 are as follows:

Mixing commercial oxide of silicon (SiO$_x$) (0.5 < x < 1.5, D$_{v50}$ = 5 μm) with graphite to obtain a negative active material, in which the weight percent of the commercial SiO$_x$ in the negative active material is 95 wt% to 100 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 2.337 mg/cm$^2$. The weight percent of the commercial SiO$_x$ in the negative active material is controlled to fall within a range of 95 wt% to 100 wt%, and an appropriate value is selected in this range so that the capacity a per unit volume of the negative electrode plate is 2839.0 mAh/cm$^3$.

During sealing, an inner pit width $w_1$ of the punched pit 1 of the packaging film 2 is controlled to be 35.6 mm, and the width $w_2$ of the battery cell is controlled to be 15.6 mm. At this time, g = 0.43, and g × a = 1220.8 mAh/cm$^3$.

After the lithium-ion full battery is obtained, the battery is tested with respect to performance indicators such as battery deformation severity and battery cycle performance. The detailed test results are shown in Table 1.

**Embodiment 13**

Differences from Embodiment 1 are as follows:

Mixing commercial oxide of silicon (SiO$_x$) (0.5 < x < 1.5, D$_{v50}$ = 5 μm) with graphite to obtain a negative active material, in which the weight percent of the commercial SiO$_x$ in the negative active material is 95 wt% to 100 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 2.590 mg/cm$^2$. The weight percent of the commercial SiO$_x$ in the negative active material is controlled to fall within a range of 95 wt% to 100 wt%, and an appropriate value is selected in this range so that the capacity a per unit volume of the negative electrode plate is 3600 mAh/cm$^3$.

During sealing, an inner pit width $w_1$ of the punched pit 1 of the packaging film 2 is controlled to be 35.6 mm, and the width $w_2$ of the battery cell is controlled to be 15.0 mm. At this time, g = 0.42, and g × a = 1512.0 mAh/cm$^3$.

After the lithium-ion full battery is obtained, the battery is tested with respect to performance indicators such as battery deformation severity and battery cycle performance. The detailed test results are shown in Table 1.

**Comparative Embodiment 4**

Differences from Embodiment 10 are as follows: during sealing, an inner pit width $w_1$ of the punched pit 1 of the packaging film 2 is controlled to be 36.2 mm, and the width $w_2$ of the battery cell is controlled to be 36.2 mm. At this time, g = 1, and g $\times$ a = 2422.2 mAh/cm$^3$.
After the lithium-ion full battery is obtained, the battery is tested with respect to performance indicators such as battery deformation severity and battery cycle performance. The detailed test results are shown in Table 1.

**Comparative Embodiment 5**

Differences from Embodiment 9 are as follows: during sealing, an inner pit width $w_1$ of the punched pit 1 of the packaging film 2 is controlled to be 52.5 mm, and the width $w_2$ of the battery cell is controlled to be 18.9 mm. At this time, g = 0.36, and g $\times$ a = 722.4 mAh/cm$^3$.
After the lithium-ion full battery is obtained, the battery is tested with respect to performance indicators such as battery deformation severity and battery cycle performance. The detailed test results are shown in Table 1.

**Comparative Embodiment 6**

Differences from Embodiment 1 are as follows:
Mixing commercial oxide of silicon ($SiO_x$) (0.5 < x < 1.5, $D_{v50}$ = 5 $\mu$m) with graphite to obtain a negative active material, in which the weight percent of the commercial $SiO_x$ in the negative active material is 11 wt% to 20 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.
The coating weight of the negative active material applied on the copper foil is 7.560 mg/cm$^2$. The weight percent of the commercial $SiO_x$ in the negative active material is controlled to fall within a range of 11 wt% to 20 wt%, and an appropriate value is selected in this range so that the capacity a per unit volume of the negative electrode plate is 619.8 mAh/cm$^3$.
During sealing, an inner pit width $w_1$ of the punched pit 1 of the packaging film 2 is controlled to be 36.35 mm, and the width $w_2$ of the battery cell is controlled to be 36.3 mm. At this time, g = 0.43, and g $\times$ a = 266.5 mAh/cm$^3$.
After the lithium-ion full battery is obtained, the battery is tested with respect to performance indicators such as battery deformation severity and battery cycle performance. The detailed test results are shown in Table 1.

**Comparative Embodiment 7**

Differences from Comparative Embodiment 6 are as follows:
Mixing commercial oxide of silicon ($SiO_x$) (0.5 < x < 1.5, $D_{v50}$ = 5 $\mu$m) with graphite to obtain a negative active material, in which the weight percent of the commercial $SiO_x$ in the negative active material is 11 wt% to 20 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.
The coating weight of the negative active material applied on the copper foil is 7.130 mg/cm$^2$. The weight percent of the commercial $SiO_x$ in the negative active material is controlled to fall within a range of 11 wt% to 20 wt%, and an appropriate value is selected in this range so that the capacity a per unit volume of the negative electrode plate is 957.8 mAh/cm$^3$.
During sealing, g $\times$ a = 411.9 mAh/cm$^3$.
After the lithium-ion full battery is obtained, the battery is tested with respect to performance indicators such as battery deformation severity and battery cycle performance. The detailed test results are shown in Table 1.

**Comparative Embodiment 8**

Differences from Embodiment 13 are as follows:
During sealing, an inner pit width $w_1$ of the punched pit 1 of the packaging film 2 is controlled to be 16.46 mm, and the width $w_2$ of the battery cell is controlled to be 16.4 mm. At this time, g = 0.996, and g $\times$ a = 3585.6 mAh/cm$^3$.
After the lithium-ion full battery is obtained, the battery is tested with respect to performance indicators such as battery deformation severity and battery cycle performance. The detailed test results are shown in Table 1.

**Comparative Embodiment 9**

Differences from Embodiment 1 lie in the thickness and tensile strength of the packaging film 2, as detailed in Table 1.

In addition, the preparation method is: mixing commercial oxide of silicon ($SiO_x$) ($0.5 < x < 1.5$, $D_{v50} = 5\ \mu m$) with graphite to obtain a negative active material, in which the weight percent of the commercial $SiO_x$ in the negative active material is 80 wt% to 85 wt%. Subsequently, mixing the negative active material, the conductive agent acetylene black, and polyacrylic acid (PAA) at a weight ratio of 95: 1.2: 3.8 in a deionized water solvent system. Stirring evenly to obtain a slurry. Coating a copper foil with the slurry, and performing drying, cold calendering, and slitting to obtain a negative electrode plate.

The coating weight of the negative active material applied on the copper foil is 2.640 mg/cm$^2$. The weight percent of the commercial $SiO_x$ in the negative active material is controlled to fall within a range of 80 wt% to 85 wt%, and an appropriate value is selected in this range so that the capacity a per unit volume of the negative electrode plate is 2422.0 mAh/cm$^3$.

During sealing, g $\times$ a = 2397.8 mAh/cm$^3$.

After the lithium-ion full battery is obtained, the battery is tested with respect to performance indicators such as battery deformation severity and battery cycle performance. The detailed test results are shown in Table 1.

**Comparative Embodiment 10**

Differences from Comparative Embodiment 9 lie in the thickness and tensile strength of the packaging film 2, as detailed in Table 1.

After the lithium-ion full battery is obtained, the battery is tested with respect to performance indicators such as battery deformation severity and battery cycle performance. The detailed test results are shown in Table 1.

Table 1

| Embodiments | Capacity a per unit volume of negative electrode plate (mAh/cm$^3$) | Thickness of aluminum plastic film ($\mu$m) | Tensile strength of aluminum plastic film (N/mm) | $w_1$ (mm) | $w_2$ (mm) | g | gxa (mAh/cm$^3$) | Ripple (%) | Number of cycles when the capacity fades to 80% |
|---|---|---|---|---|---|---|---|---|---|
| Embodiment 1 | 619.8 | 115 | 8.6 | 15.7 | 15.6 | 0.99 | 613.6 | 2.0 | 789 |
| Embodiment 2 | 619.8 | 115 | 8.6 | 36.7 | 36.1 | 0.98 | 607.4 | 0.6 | 800 |
| Embodiment 3 | 957.8 | 115 | 8.6 | 17.1 | 16.5 | 0.96 | 919.5 | 2.4 | 521 |
| Embodiment 4 | 957.8 | 115 | 8.6 | 37.2 | 36.2 | 0.97 | 929.1 | 2.0 | 530 |
| Embodiment 5 | 1151.3 | 115 | 8.6 | 17.0 | 16.0 | 0.94 | 1082.2 | 2.6 | 423 |
| Embodiment 6 | 1151.3 | 115 | 8.6 | 37.5 | 36.3 | 0.97 | 1116.8 | 0.8 | 410 |
| Embodiment 7 | 1336.7 | 115 | 8.6 | 17.9 | 15.9 | 0.89 | 1189.6 | 2.8 | 356 |
| Embodiment 8 | 1671.8 | 115 | 8.6 | 40.7 | 36.9 | 0.91 | 1521.3 | 1.6 | 346 |
| Embodiment 9 | 2006.6 | 115 | 8.6 | 21.8 | 15.8 | 0.72 | 1444.8 | 2.9 | 289 |
| Embodiment 10 | 2422.2 | 115 | 8.6 | 78.0 | 70.0 | 0.89 | 2155.7 | 1.8 | 278 |
| Embodiment 11 | 2677.7 | 115 | 8.6 | 45.9 | 35.9 | 0.78 | 2088.6 | 3.2 | 256 |
| Embodiment 12 | 2839.0 | 115 | 8.6 | 35.6 | 15.6 | 0.43 | 1220.8 | 1.9 | 230 |
| Embodiment 13 | 3600 | 115 | 8.6 | 35.6 | 15.0 | 0.42 | 1512.0 | 2.0 | 200 |
| Comparative Embodiment 1 | 619.8 | 115 | 8.6 | 36.0 | 36.0 | 0.9992 | 619.3 | 5.8 | 436 |
| Comparative Embodiment 2 | 957.8 | 115 | 8.6 | 16.54 | 16.5 | 0.9975 | 955.4 | 6.3 | 326 |
| Comparative Embodiment 3 | 1151.3 | 115 | 8.6 | 44.5 | 15.6 | 0.35 | 403.0 | 5.1 | 223 |
| Comparative Embodiment 4 | 2422.2 | 115 | 8.6 | 36.2 | 36.2 | 1 | 2422.2 | 7.2 | 156 |
| Comparative Embodiment 5 | 2006.6 | 115 | 8.6 | 52.5 | 18.9 | 0.36 | 722.4 | 8.3 | 80 |
| Comparative Embodiment 6 | 619.8 | 115 | 8.6 | 36.35 | 36.3 | 0.43 | 266.5 | 10.2 | 50 |

EP 4 120 416 A1

(continued)

| Embodiments | Capacity a per unit volume of negative electrode plate (mAh/cm³) | Thickness of aluminum plastic film (μm) | Tensile strength of aluminum plastic film (N/mm) | $w_1$ (mm) | $w_2$ (mm) | g | gxa (mAh/cm³) | Ripple (%) | Number of cycles when the capacity fades to 80% |
|---|---|---|---|---|---|---|---|---|---|
| Comparative Embodiment 7 | 957.8 | 115 | 8.6 | 36.35 | 36.3 | 0.43 | 411.9 | 10.9 | 35 |
| Comparative Embodiment 8 | 3600 | 115 | 8.6 | 16.46 | 16.4 | 0.996 | 3585.6 | 5.6 | 85 |
| Comparative Embodiment 9 | 2422 | 67 | 4 | 15.7 | 15.6 | 0.99 | 2397.8 | 2.5 | 250 |
| Comparative Embodiment 10 | 2422 | 153 | 10 | 15.7 | 15.6 | 0.99 | 2397.8 | 1.8 | 261 |

Referring to Table 1, the ripple value is measured at the end of 100 cycles. When the ripple value is greater than 2%, deformation occurs. When the ripple value is greater than 4%, the deformation is severe. The capacity a per unit volume is tested by the following method: taking a negative electrode plate (single-side region) obtained in the embodiments, measuring a thickness of a single side of electrode plate (denoted by $t_1$) and a thickness of a corresponding copper foil (denoted by $t_2$) with a high-precision micrometer, drying the electrode plate at 85 °C in a vacuum oven for 12 hours, cutting the electrode plate in a dry environment into small discs 1.4 cm in diameter by using a stamping machine. Using a metallic lithium sheet as a counter electrode in a glovebox, using a Ceglard composite film as a separator, and injecting an electrolytic solution to make a button battery. Performing a charge-and-discharge test on the battery by using a LAND series battery test system to test the charge-and-discharge performance of the battery. The obtained capacity is denoted by C1 (mAh). Therefore, the capacity per unit volume is: a = C1 $\times$ coating weight per unit area/($t_1$ - $t_2$).

First, as indicated by comparison between Embodiments 1 to 6 and Comparative Embodiments 1 to 3, on condition that the capacity per unit volume of the negative electrode plate is constant, different values of g give rise to different degrees of deformation.

Specifically, as found in the grouped comparison of Embodiment 4 versus Comparative Embodiment 2 and Embodiment 6 versus Comparative Embodiment 3, on condition that the capacity per unit volume is constant, the battery cell deformation and the battery cycle stability are significantly affected by an excessive or deficient value of g.

Further, as found in the grouped comparison of Embodiments 1 and 2 versus Comparative Embodiment 1, Embodiments 3 and 4 versus Comparative Embodiment 2, and Embodiments 5 and 6 versus Comparative Embodiment 3, on condition that the capacity per unit volume of the negative electrode plate is constant, the battery cell is severely deformed when the value of g is greater than 0.997 or the value of g is less than 0.4. When the value of g is greater than 0.997, it indicates that the clearance between the battery cell and the punched pit is too small to alleviate the volume expansion of the battery cell. As shown in Comparative Embodiments 1 to 2, the battery cell is severely deformed. When the value of g is less than 0.4, as in Comparative Embodiment 3, it indicates that the clearance between the battery cell and the punched pit is relatively large. On the one hand, the space available for the electrolytic solution to infiltrate the battery cell is relatively small on condition that the amount of the electrolytic solution is constant, the solid electrolyte interphase (SEI) deteriorates, and in turn, the cycle performance deteriorates. On the other hand, the mobility of the battery cell in the punched pit is higher, thereby impairing the safety of the battery cell. In addition, with the severely deformed battery cell, the cycle performance of the battery deteriorates significantly. That is because, when the battery cell is severely deformed, voids are formed between the electrode and the separator, micro-cracks are formed on the electrode plate, the solid electrolyte interphase (SEI) film is ruptured and reorganized, and the electrolytic solution is consumed, thereby deteriorating the cycle performance of the battery.

Second, as found in the comparison of Embodiment 12 versus Comparative Embodiments 6 and 7, on condition that the value of g is constant, a different capacity a per unit volume of the negative electrode plate makes a sharp difference in the battery cell deformation and the battery cycle stability. Therefore, for each different capacity a per unit volume of the negative electrode plate, a matching value of g needs to be set to alleviate the volume expansion, further alleviate the battery cell deformation, and improve the battery cycle stability. Moreover, as can be seen from Comparative Embodiments 6 and 7, the battery cell is severely deformed when the value of g is greater than 0.4 and less than 0.997 but g$\times$a is less than 420 mAh/cm$^3$. Similarly, when the value of g is greater than 0.4 and less than 0.997 but g$\times$a is greater than 2300 mAh/cm$^3$, the battery cell is also severely deformed, as shown in Comparative Embodiment 8. That is to say, a different capacity a per unit volume of the negative electrode plate gives rise to a different degree of volume expansion. Therefore, a distinct clearance (that is, an interspace between the battery cell and the punched pit of the packaging film) needs to be set according to the capacity a per unit volume, so as to minimize volume expansion and achieve highest space efficiency.

To sum up, the value of g is a main factor affecting the deformation of the battery cell subjected to cycles. For each different capacity a per unit volume of the negative electrode plate, a matching value of g needs to be set to optimize the structure of the battery cell. When the capacity a per unit volume of the negative electrode plate is in the range of 619 mAh/$cm^3$ < a < 3620 mAh/$cm^3$, the battery cell deformation is greatly alleviated and the battery cycle stability is greatly improved by setting the value of g to be greater than 0.4 and less than 0.997 and making g$\times$a be greater than 420 mAh/cm$^3$ and less than 2300 mAh/cm$^3$. This shows that, for a purpose of optimizing the structure of the battery cell, the practice of reserving a corresponding space according to each different capacity a per unit volume can effectively alleviate the volume expansion and battery cell deformation, and in turn, improve the cycle stability of the battery and increase the product yield rate.

In addition, referring to Table 1, as can be seen from Comparative Embodiments 9 to 10, the thickness and strength of the aluminum plastic film exert an impact on the battery cell deformation and the later-stage cycle performance of the battery. If the aluminum plastic film is excessively thin, the tensile strength is not enough, so that the battery cell subjected to cycles deforms to some extent. If the aluminum plastic film is excessively thick, the volumetric specific capacity of the full battery decreases to some extent because the volume of the aluminum plastic film is a part of the total volume although the battery cell is not deformed obviously and the cycle performance of the battery does not fade obviously.

Understandably, a plurality of other embodiments of the present invention are conceivable. Various modifications and variations, which may be made by a person skilled in the art based on the present invention without departing from the spirit and essence of the present invention, still fall within the protection scope of the present invention.

**Claims**

1. A lithium-ion battery, comprising a battery cell, an electrolytic solution, and a packaging film, wherein the battery cell is formed by winding a positive electrode plate and a negative electrode plate that are separated by a separator, and the lithium-ion battery is half-charged to obtain a half-charged full battery, and the half-charged full battery is stripped of the packaging film to obtain a half-charged cell, **characterized in that**:

    when a width of the half-charged full battery is wi, a width of the half-charged cell is $w_2$, and $g = w_2/w_1$, the following conditional expression (1) is satisfied:

    $$0.4 < g < 0.997 \qquad (1);$$

    and
    the negative electrode plate comprises a silicon-based material, and, when a capacity per unit volume of the negative electrode plate is a, a and g satisfy the following conditional expression (2):

    $$420 \text{ mAh}/cm^3 < g \times a < 2300 \text{ mAh}/cm^3 \qquad (2)$$

    wherein, $619 \text{ mAh}/cm^3 < a < 3620 \text{ mAh}/cm^3$.

2. The lithium-ion battery according to claim 1, **characterized in that** the silicon-based material comprises at least one of nano-silicon, oxide of silicon, a silicon-carbon composite material, or a silicon alloy material.

3. The lithium-ion battery according to claim 1, **characterized in that** the silicon-based material is granular, and an average particle diameter thereof is 500 nm to 30 $\mu$m.

4. The lithium-ion battery according to claim 2, **characterized in that** the nano-silicon is granular, and an average particle diameter thereof is less than 100 nm.

5. The lithium-ion battery according to claim 2, **characterized in that** the oxide of silicon is $SiO_x$, wherein $0.6 \leq x \leq 2$.

6. The lithium-ion battery according to claim 1, **characterized in that** a positive active material of the positive electrode plate is at least one selected from combinations of lithium cobalt oxide, lithium manganese oxide, lithium iron phosphate, lithium nickel oxide, lithium nickel cobalt oxide, or lithium nickel cobalt manganese oxide.

7. The lithium-ion battery according to claim 1, **characterized in that** the separator is at least one selected from combinations of polyethylene, polypropylene, or polyvinylidene difluoride.

8. The lithium-ion battery according to claim 1, **characterized in that** the packaging film is an aluminum plastic film.

9. The lithium-ion battery according to claim 1, **characterized in that** the packaging film possesses a thickness of 67 to 153 $\mu$m and a tensile strength of 4 to 10 N/mm.

10. An electronic device, **characterized in that** the electronic device comprises the lithium-ion battery according to any one of claims 1 to 9.

FIG. 1

FIG. 2

FIG. 3

FIG. 4

## INTERNATIONAL SEARCH REPORT

| | International application No. |
|---|---|
| | **PCT/CN2020/078772** |

**A.    CLASSIFICATION OF SUBJECT MATTER**

H01M 10/0525(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 电池, 电芯, 负极, 阳极, 体积, 容量, 克容量, 比容量, 宽度, 厚度, 膨胀, battery, cell, core, anode, negative, vol, volume, capacity, breadth, width, thickness, expan+

**C.    DOCUMENTS CONSIDERED TO BE RELEVANT**

| Category* | Citation of document, with indication, where appropriate, of the relevant passages | Relevant to claim No. |
|---|---|---|
| A | CN 106784843 A (ZHONGTIAN ENERGY STORAGE TECHNOLOGY CO., LTD.) 31 May 2017 (2017-05-31)<br>description, paragraphs [0018]-[0023] | 1-10 |
| A | CN 101388439 A (SAMSUNG SDI CO., LTD.) 18 March 2009 (2009-03-18)<br>entire document | 1-10 |
| A | CN 107732145 A (DONGGUAN CHAM BATTERY TECHNOLOGY CO., LTD.) 23 February 2018 (2018-02-23)<br>entire document | 1-10 |
| A | CN 108461804 A (SHENZHEN ZHUONENG NEW ENERGY LIMITED BY SHARE LTD.) 28 August 2018 (2018-08-28)<br>entire document | 1-10 |
| A | US 2009136847 A1 (JEONG, Goo-Jin et al.) 28 May 2009 (2009-05-28)<br>entire document | 1-10 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2020** | **27 November 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/078772**

| Patent document cited in search report | | | Publication date (day/month/year) | Patent family member(s) | | | Publication date (day/month/year) |
|---|---|---|---|---|---|---|---|
| CN | 106784843 | A | 31 May 2017 | None | | | |
| CN | 101388439 | A | 18 March 2009 | KR | 100917736 | B1 | 15 September 2009 |
| | | | | US | 2009075168 | A1 | 19 March 2009 |
| | | | | CN | 101388439 | B | 15 June 2011 |
| | | | | US | 8492025 | B2 | 23 July 2013 |
| | | | | KR | 20090028243 | A | 18 March 2009 |
| CN | 107732145 | A | 23 February 2018 | None | | | |
| CN | 108461804 | A | 28 August 2018 | None | | | |
| US | 2009136847 | A1 | 28 May 2009 | KR | 100898293 | B1 | 18 May 2009 |

Form PCT/ISA/210 (patent family annex) (January 2015)